# EUROPÄISCHE PATENTSCHRIFT

(11) **EP 1 226 376 B1**
(45) Veröffentlichungstag und Bekanntmachung des Hinweises auf die Patenterteilung: **11.02.2004**
(21) Anmeldenummer: 00962496.6
(22) Anmeldetag: 15.09.2000
(51) Int. Cl.: F16H 63/48

(54) **DOPPELKUPPLUNGSGETRIEBE UND VERFAHREN ZUR STEUERUNG EINES AUTOMATISIERTEN DOPPELKUPPLUNGSGETRIEBES**
DOUBLE CLUTCH TRANSMISSION AND METHOD FOR CONTROLLING AN AUTOMATED DOUBLE CLUTCH TRANSMISSION
BOITE DE VITESSES A EMBRAYAGE DOUBLE ET PROCEDE DE REGULATION D'UNE BOITE DE VITESSES A EMBRAYAGE DOUBLE AUTOMATISEE

(30) Priorität: 21.10.1999 DE 19950696
(43) Veröffentlichungstag der Anmeldung: 31.07.2002
(73) Patentinhaber: Volkswagen Aktiengesellschaft, 38436 Wolfsburg (DE)
(72) Erfinder: SCHAMSCHA, Axel, 38458 Velpke (DE)
(74) Vertreter: Hübsch, Dirk, Dipl.-Ing.
(86) Internationale Anmeldenummer: PCT/EP2000/009068
(87) Internationale Veröffentlichungsnummer: WO 2001/029455

(56) Entgegenhaltungen:
- EP-A- 0 691 486
- WO-A-00/20243
- DE-A- 3 414 107
- DE-A- 3 546 454
- DE-A- 4 316 784
- DE-A- 19 800 880

## Beschreibung

Die Erfindung betrifft ein Doppelkupplungsgetriebe gemäß dem Oberbegriff des Patentanspruchs 1. Des weiteren wird ein Verfahren zur Steuerung eines automatisierten Doppalkupplungsgetriebes angegeben.

Doppelkupplungsgetriebe sind seit längerem bekannt und werden bevorzugt in Kraftfahrzeugen eingesetzt. Ein Doppelkupplungsgetriebe weist im allgemeinen eine erste Getriebeeingangswelle, der eine erste Kupplung und Gangräder einer ersten Gruppe von Gängen zugeordnet sind, eine zweite Getriebeeingangswelle, der eine zweite Kupplung und Gangräder einer zweiten Gruppe von Gängen zugeordnet sind, und eine gemeinsame Getriebeabtriebswelle auf. Zumeist umfaßt die erste Gruppe von Gängen die ungeradzahligen Vorwärtsgänge sowie den Rückwärtsgang, die zweite Gruppe von Gängen die geradzahligen Vorwärtsgänge. In einem derart ausgebildeten Doppeikupplungsgetriebe besteht ein Schaltvorgang, d.h. ein Wechsel von einem wirksamen Lastgang in einen nächsthöheren oder nächstniedrigeren Zielgang zunächst in einem Einlegen des Zielganges, was z.B. über eine entsprechende Schaltmuffe und eine dem Zielgang zugeordnete Synchronisiervorrichtung erfolgen kann, und in einem anschließenden überschnittenen Trennen der der Getriebeeingangswelle des Lastganges zugeordneten Kupplung und Schließen der der Getriebeeingangswelle des Zielganges zugeordneten Kupplung, wobei eine Zugkraftunterbrechung weitgehend vermeidbar ist. Abgesehen von den Schaltvorgängen erfolgt die Kraftübertragung jewells wechselweise über die erste oder die zweite Getriebeeingangswelle.

Zur Anpassung an bestimmte Einsatzbedingungen und zur Realisierung von Zusatzfunktionen sind Variationen bzw, Weiterbildungen des Doppelkupplungsgetriebes entwickelt worden.

So ist beispielsweise aus der DE 35 46 454 A1 ein Doppelkupplungsgetriebe bekannt, bei dem die beiden Getriebeeingangswellen durch eine zusätzliche Kupplung verbindbar sind. Dadurch sind insbesondere für einen Anfahrvorgang beide Kupplungen nutzbar, wodurch die verfügbare Kupplungskapazität erhöht und die thermische Belastung der Kupplungen verringert werden kann. Eine weitere Nutzung der zusätzlichen Kupplung, beispielsweise für eine Parksperre, ist nicht möglich.

In der gattungsbildenden DE 43 16 784 A1 wird ein Doppelkupplungsgetriebe beschrieben, das für ein Fahrzeug mit Elektroantrieb vorgesehen ist und nur zwei Gänge aufweist. Die Gangräder der beiden Gänge sind jeweils fest mit einer der Getriebeeingangswellen und der gemeinsamen Getriebeabtriebswelle verbunden. Ein Gangwechsel erfolgt daher ausschließlich über die beiden zugeordneten Kupplungen. Zur Realisierung einer Parksperre und einer sogenannten Bergstütze sind beide Kupplungen gleichzeitig schließbar ausgebildet. Eine derartige Ausbildung einer Parksperre ist jedoch bel Doppelkupplungsgetrieben, die in modernen Kraftfahrzeugen üblich sind und aktiv schließbare Kupplungen sowie jeweils mehrere Gänge pro Getriebeeingangswelle aufweisen, nicht anwendbar.

Im Stand der Technik ist auch ein Doppelkupplungsgetriebe bekannt gattungsbildende (EP 0 691 486 A1), daß zwei Getriebeeingangswellen aufweist, wobei einer der Getriebeeingangswellen mehrere Gänge zugeordnet sind. In einem bestimmten Schaltungszustand dieses Doppelkupplungsgetriebes verhindert nur der Motor das Drehen der Fahrzeugräder, was nicht als Realisierung einer "richtigen Parksperre" zu bezeichnen ist.

Weiterhin ist aus dem Stand der Technik ein Wechselgetriebe mit einer Getriebeeingangswelle bekannt (DE 198 00 880 A1), daß eine Schaltvorrichtung aufweist, wobei hier zur Erzeugung einer Parksperre zwei Gänge gleichzeitig eingelegt werden, Das Lösen der Parksperre bei einer größeren Verspannung der gleichzeitig eingelegten Gänge ist bei diesem Getriebe jedoch problematisch.

Es stellt sich daher das Problem, das gattungsbildende Doppelkupplungsgetriebe in bezug auf eine Verwendung in einem mit einem Verbrennungsmotor ausgerüsteten Kraftfahrzeug mit einer möglichst einfachen und kostengünstigen Parksperre weiterzuentwickeln und ein entsprechendes Verfahren zur Steuerung eines erfindungsgemäßen automatisierten Doppelkupplungsgetriebes aufzuzeigen.

Das Problem betreffend das Doppelkupplungsgetriebe wird durch die Merkmale des Anspruches 1 gelöst. Vorteilhafte Ausgestaltungen des Doppelkupplungsgetriebes ergeben sich aus den Unteransprüchen 2 bis 8, in den Ansprüchen 9 bis 12 wird ein erfindungsgemäßes Verfahren zur Steuerung eines automatisierten Doppelkupplungsgetriebes angegeben.

Das insbesondere für eine Verwendung in einem Kraftfahrzeug vorgesehene Doppelkupplungsgetriebe ist mit einer einen Anfahrgang aufweisenden und mit einer ersten Kupplung verbundenen ersten Getriebeeingangswelle, mit einer einen Fahrgang aufweisenden und mit einer zweiten Kupplung verbundenen zweiten Getriebeeingangswelle, und mit einer gemeinsamen Getriebeabtriebswelle versehen. Mindestens einer der beiden Getriebeeingangswellen sind mehrere Gänge zugeordnet,

Zur Realisierung einer Parksperrenfunktion sind zwei der zweiten Getriebeeingangswelle zugeordnete Gänge gleichzeitig schaltbar ausgebildet.

Durch eine möglichst hohe Anzahl von Gängen ist eine Anpassung des Doppelkupplungsgetriebes an spezielle Eigenschaften eines als Antriebsmotor dienenden Verbrennungsmotors möglich, dessen nutzbarer Betriebsbereich in einem beschränkten Drehzahlbereich liegt. Durch ein gleichzeitiges Schalten von zwei der zweiten Getriebeeingangswelle zugeordneten Gängen, d.h. ein Einrücken zugeordneter Schaltkupplungen, wird die mit Antriebsrädern des Kraftfahrzeuges in Verbindung stehende Getriebeabtriebswelle über entsprechende Gangräder der geschalteten Gänge und die mit diesen verbundene Getriebeeingangswelle blockiert, wodurch ein Wegrollen des Kraftfahrzeuges zuverlässig verhinderbar ist. Somit ist ohne einen wesentlichen Mehraufwand eine wirksame Parksperre realisiert, die bevorzugt bei einer Verwendung aktiv schileßbarer Kupplungen, die im Ruhezustand geöffnet sind, anwendbar ist. Eine separate Parksperre, die häufig in Form einer an der Getriebeabtriebswelle angeordneten Klauenkupplungssperre ausgebildet ist, kann eingespart werden.

In dem Doppelkupplungsgetriebe weist die erste Getriebeeingangswelle alle Anfahrgänge auf, und die zwei gleichzeitig schaltbaren Gänge sind der zweiten Getriebeeingangswelle zugeordnet. Bei einer derartigen Anordnung wird das Lösen der Parksperre bei einer größeren Verspannung der als Parksperre gleichzeitig geschalteten Gänge wesentlich erleichtert und ggf. erst ermöglicht, Wird das Kraftfahrzeug beispielsweise an einer Gefällstrecke mittels der Parksperre abgestellt, so wird aufgrund einer bergab gerichteten Gewichtskomponente des Kraftfahrzeuges ein Schubmoment über die Antriebsräder und weitere Bauteile des Antriebsstranges in die Getriebeabtriebswelle eingeleitet. Aufgrund unterschiedlicher Übersetzungsverhältnisse der in der Parksperrenfunktion geschalteten Gänge und einem eingangsseitigen Verbindung über die gemeinsame Getriebeeingangswelle werden die Gangräder des niedrigeren Ganges in Schubrichtung und die Gangräder des höheren Ganges in Zugrichtung verspannt. Dabei können die an den zugeordneten Schaltkupplungen wirksamen Momente so groß sein, daß die Gänge nicht oder nur mit unzulässig hohen Stellkräften gelöst werden können. Für einen Anfahrvorgang ist es daher vorteilhaft, wenn zunächst über einen Gang der anderen Getriebeeingangswelle ein der Verspannungsrichtung entgegengesetztes Moment in die Getriebeabtriebswelle eingeleitet werden kann, was durch die vorliegende Anordnung ermöglicht wird. Dabei wird zunächst der betreffende Gang eingelegt und die zugeordnete erste Kupplung geschlossen, Dadurch wirkt über die Getriebeabtriebswelle ein ansteigendes Drehmoment, durch das mindestens eine Schaltkupplung der beiden als Parksperre geschalteten Gänge entlastet wird, so daß diese mit einer relativ geringen Stellkraft geöffnet werden kann. Dadurch ist dann auch die andere Schaltkupplung entlastet, so daß auch diese weitgehend kraftios geöffnet werden kann, wodurch die Parksperre dann vollständig gelöst ist. In dem geschilderten Beispiel des an einer Gefällstrecke abgestellten Kraftfahrzeuges ist der Rückwärtsgang der zur Kompensation der Verspannung geeignete Gang. Bei einem an einer Steigung abgestellten Kraftfahrzeug ist die Verspannungsrichtung umgekehrt, so daß in diesem Fall ein Vorwärtsgang, z.B. der erste Gang, zur Kompensation der gewichtsbedingten Verspannung geeignet ist. Aufgrund eines jeweils höheren verfügbaren Drehmomentes bei gleichzeitig geringer Ausgangsdrehzahl sind bevorzugt die Anfahrgänge, d.h. der erste Gang und der Rückwärtsgang, zur Kompensation von Verspannungen nutzbar.

Die zwei gleichzeitig schaltbaren Gänge können manuell schaltbar sein. Zur Durchführung der Schaltung ist dann zweckmäßigerweise ein separates Schaltelement, z.B. ein Parkschalthebel, vorgesehen. Über das Schaltelement ist das Einlegen der Parksperre von einem Fahrer eingebbar und über eine Übertragungsmechanik in zugeordnete Schaltkupplungen der betreffenden zwei Gänge einleitbar. Der Vorteil einer manuellen bzw. mechanischen Schaltung der Gänge liegt in einer geringen Störungsanfälligkeit und der Möglichkeit für den Fahrer, unmittelbar Einfluß auf die Parksperre zu nehmen. Ist die gleichzeitige Schaltung der beiden Gänge beispielsweise nicht möglich, weil Klauen mindestens einer der beiden betroffenen Schaltkupplungen nicht fluchten, kann der Fahrer das Kraftfahrzeug geringfügig welterrollen lassen, bis die beiden Gänge leicht eingelegt werden können.

Die zwei gleichzeitig schaltbaren Gänge können jedoch auch automatisiert schaltbar sein und zur Auslösung der Schaltung kann eine Parkstellung eines Schalthebels oder ein separates Schaltelement vorgesehen sein, Eine automatisierte Schaltung der Gänge, die zumeist über ein Steuergerät und von diesem ansteuerbare Stellantriebe erfolgt, ist in Doppelkupplungsgetrieben weit verbreitet Es ist daher mit geringem Aufwand, d.h. ohne eine zusätzliche Mechanik, möglich, eine Parksperre zu realisieren, wenn die zwei betreffenden Gänge gleichzeitig automatisiert schaltbar sind. Die Auslösung der Schaltung kann analog zu Schaltkulissen von Automatikgetrieben in einer Parkstellung des zugeordneten Schalthebels erfolgen. Falls eine solche Parkstellung nicht vorgesehen ist, kann der Schaltvorgang auch über ein spezielles Schaltelement erfolgen, das z.B. als zusätzlicher Parkschalthebel, als Kippschalter oder in anderer Weise ausgebildet sein kann.

Die zwei gleichzeitig schaltbaren Gänge können jeweils nächstbenachbarte Gänge sein. Bei der üblichen Anordnung der Gänge wären das die Kombinationen zweiter / vierter Gang und vierter / sechster Gang. Bei einer Verwendung der nächstbenachbarten Gänge ist aufgrund geringerer Übersetzungsunterschiede im eingelegten Fall die Verspannung der Gänge und damit der betreffenden Schaltkupplungen geringer als bei Verwendung der Kombination zweiter und sechster Gang. Somit läßt sich die Parksperre dann leichter einlagen und lösen.

Die zwei gleichzeitig schaltbaren Gänge können fest vorbestimmt sein, wobei es sich dann vorteilhaft um die größten nächstbenachbarten Gänge handelt. Besonders bei einer manuellen bzw. mechanischen Betätigung der Parksperre ist zur Vereinfachung der Mechanik eine feste Vorgabe der zwei gleichzeitig schaltbaren Gänge vorteilhaft. Zumeist ist dann eine Verwendung der größten nächstbenachbarten Gänge zu bevorzugen, da bei diesen der Übersetzungsunterschied am geringsten und damit die Schaltbarkeit am besten ist.

Bei automatisierter Schaltung der für die Parksperrenfunktion vorgesehenen Gänge ist es vorteilhaft, wenn die zwei gleichzeitig schaltbaren Gänge weitgehend variabel wählbar sind. Bei einem Sechsganggetriebe mit jeweils drei Gängen pro Getriebeeingangswelle ergeben sich für die betreffende Getriebeeingangswelle drei Kombinationen von Gängen, die zur Realisierung der Parksperrenfunktion möglich sind. ist z.B. eine bestimmte Kombination von Gängen mit höchster Priorität vorgegeben und einer der beiden Gänge ist, z.B. aufgrund ungünstiger Fluchtung von Klauen der zugeordneten Schaltkupplung, momentan nicht oder nur mit einer unzulässig hohen Stellkraft schaltbar, so kann stattdessen der zunächst nicht vorgesehene Gang geschaltet werden.

Ebenfalls können Sensoren zur Bestimmung einer Verspannungsstärke und / oder zur Ermittlung einer Verspannungsrichtung der gleichzeitig schaltbaren Gänge vorgesehen sein. Besonders bei automatisierter Schaltung der betreffenden Gänge ist es für einen Anfahrvorgang vorteilhaft, zunächst die Verspannungsstärke festzustellen. Ist sie klein genug, so kann die Parksperre sofort ohne weitere Vorkehrungen gelöst werden. Ist sie dagegen größer, liefert eine Ermittlung der Verspannungsrichiung einen Gang der ersten Getriebeeingangswelle, der zur Kompensation der Verspannung genutzt werden kann, bevor die Parksperre lösbar ist.

Zur Vermeidung einer Schaltung der zwei gleichzeitig schaltbaren Gänge bei rollendem Kraftfahrzeug kann eine Sicherheitssperre vorgesehen sein. Diese Sicherheitssperre kann bei Fahrzeugstillstand lösbar ausgebildet sein, so daß die Parksperre nur bei stillstehendem Kraftfahrzeug eingelegt werden kann. Bei einer automatisierten Betätigung der zwei für die Parksperrenfunktion nutzbaren Gänge kann die Sicherheitssperre beispielsweise in einer entsprechenden Sicherheitsabfrage in einem Steuerprogramm eines zugeordneten elektronischen Steuergerätes bestehen, durch die eine Schaltung der zwei für die Parksperrenfunktion vorgesehenen Gänge solange verhinderbar ist, wie durch einen Bewegungssensor eine Bewegung des betreffenden Kraftfahrzeuges detektiert wird, was in der Sicherheitsabfrage ausgewertet wird. Der Bewegungssensor kann beispielsweise als Drehsensor ausgebildet und an der Getriebeabtriebswelle angeordnet sein. Im Falle einer manuellen bzw. mechanischen Betätigung der Parksperre kann die Sicherheitssperre z.B. in Form eines federbelasteten und mit einem Elektromagneten versehenen Sperrbolzens ausgebildet sein, durch den die entsprechende Übertragungsmechanik oder das Betätigungselement in einer Ruhestellung, in der die Parksperre gelöst ist, über die Feder arretierbar und bei einem Fahrzeugstillstand zur Ermöglichung des Einlegens über den Elektromagneten freigebbar ist.

Das Verfahren zur Steuerung eines automatisierten Doppelkupplungsgetriebes sieht vor, daß in einer Parksperrenfunktion eine Aktivierung einer Parksperre durch ein gleichzeitiges Einlegen von zwei einer keinen Anfahrgang aufweisenden Getriebeeingangswelle zugeordneten Gängen erfolgt. Dadurch, daß die Anfahrgänge der anderen Getriebeeingangswelle zugeordnet sind, ist zur weitgehend kraftlosen Lösung der Parksperre eine Kompensation von Verspannungen möglich, die sich gewichtsbedingt bei einem Abstellen des Kraftfahrzeuges an Gefällen und Steigungen ergeben können.

Zur Vermeidung einer Aktivierung der Parksperre bei rollendem Fahrzeug kann zunächst bestimmt werden, ob eine Fahrzeugbewegung oder ein Fahrzeugstillstand vorliegt. Bei Vorliegen einer Fahrzeugbewegung wird dann die Aktivierung der Parksperre verhindert, wogegen sie bei Vorliegen eines Fahrzeugstillstandes zugelassen wird und nachfolgend vorgenommen werden kann.

Zur Deaktivierung der Parksperre kann zunächst eine Verspannungsstärke der gleichzeitig geschalteten Gänge bestimmt werden. Bei Vorliegen einer kleineren VerSpannung kann die Schaltung der betreffenden Gänge weitgehend kraftlos gelöst werden, so daß keine weiteren Vorbereitungen zur Lösung der Parksperre erforderlich sind.

Bei Vorliegen einer größeren Verspannung jedoch ist es vorteilhaft, die Verspannungsrichtung zu ermitteln, nachfolgend einen der Verspannungsrichtung entgegengerichteten Anfahrgang einzulegen und eine zugeordnete Kupplung soweit zu schließen, bis die Verspannung hinreichend klein ist, worauf die Schaltung der Gänge weitgehend kraftlos gelöst werden kann.

Im folgenden wird das Doppelkupplungsgetriebe und das entsprechende Verfahren anhand einer Figur näher erläutert.

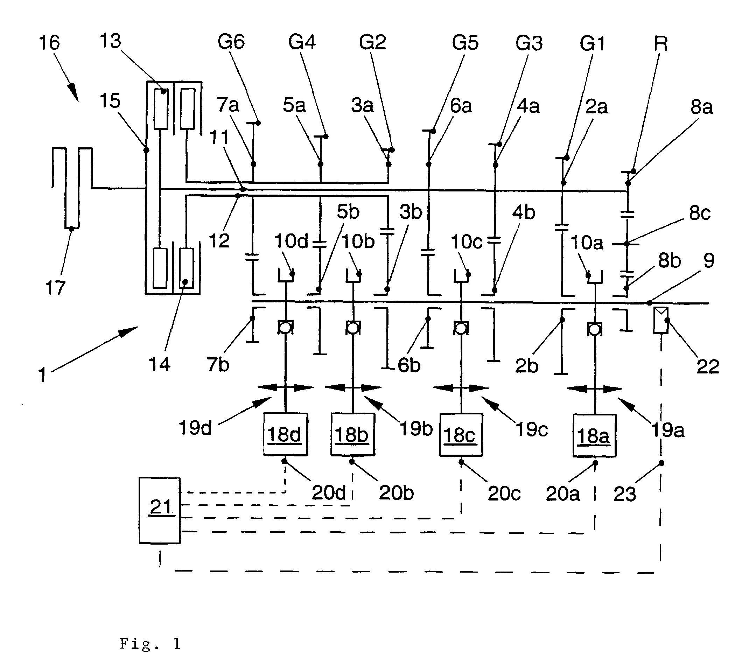

In der Figur ist ein Doppelkupplungsgetriebe 1 schematisch dargestellt, das sechs Vorwärtsgänge G1 - G6 und einen Rückwärtsgang R aufweist. Den Vorwärtsgängen G1 - G6 ist jeweils ein Zahnradpaar bestehend aus einem Antriebsrad 2a - 7a und einem Abtriebsrad 2b - 7b zugeordnet. Der Rückwärtsgang R weist dagegen neben einem Antriebsrad 8a und einem Abtriebsrad 8b zur Drehrichtungsumkehr zusätzlich ein Zwischenrad 8c auf. Die jeweiligen Abtriebsräder 2b - 8b sind drehbar auf einer Getriebeabtriebswelle 9 gelagert und mit dieser zur Schaltung der Gänge G1 - G6; R über zugeordnete Schalt- und Synchronisiervorrichtungen 10a - 10d drehfest verbindbar. Die Schalt- und Synchronisiervorrichtungen 10a, 10c und 10d sind doppelseitig wirksam ausgebildet, d.h. daß durch diese jeweils alternativ einer von zwei Gängen schaltbar ist, beispielsweise im Falle der Schalt- und Synchronisiervorrichtung 10c der dritte oder der fünfte Gang G3, G5, Dagegen ist die Schalt- und Synchronisiervorrichtung 10b nur einseitig wirksam ausgebildet, d.h. über diese ist nur der zweite Gang G2 schaltbar. Eingangsseitig sind die jeweiligen Antriebsräder 2a - 8a jeweils fest mit einer von zwei koaxial angeordneten Getriebeeingangswellen 11 und 12 verbunden. Die ungeradzahligen Gänge G1, G3 und G5 und der Rückwärtsgang R sind der ersten, zentral angeordneten Getriebeeingangswelie 11, die geradzahligen Gänge G2, G4 und G6 der zweiten, als Hohlwelle ausgebildeten Getriebeeingangswelle 12 zugeordnet. Die zwei Getriebeeingangswellen 11, 12 stehen jeweils mit einer separaten Kupplung 13 bzw. 14 in Verbindung, über die sie über einen gemeinsamen Kupplungskorb 15 mit einem Antriebsmotor 16, der in der Figur durch eine Kurbelwelle 17 symbolisiert ist, verbindbar bzw. von diesem trennbar sind. Während eines normalen Fahrbetriebes ist einer der Gänge G1 - G6 geschaltet und die mit der entsprechenden Getriebeeingangswelle 11 bzw. 12, der der betreffende Gang zugeordnet ist, in Verbindung stehende Kupplung 13 bzw. 14 geschlossen. Bel einem Schaltvorgang wird zunächst ein Zielgang, der der anderen, offenen Kupplung 14 bzw. 13 zugeordnet ist, geschaltet. Ein Übergang von dem geschalteten aktiven Gang auf den Zielgang erfolgt dann durch gleichzeitiges Öffnen der Kupplung des aktiven Ganges und Schließen der Kupplung das Zielganges. Der Kraftfluß des Getriebes verläuft demnach zwischen den Schaltvorgängen abwechselnd entweder über die erste Kupplung 11, die erste Getriebeeingangswelle 13 und Zahnrädern eines dieser zugeordneten Ganges G1, G3, G5, R oder über die zweite Kupplung 12, die zweite Getriebeeingangswelle 14 und Zahnrädern eines dieser zugeordneten Ganges G2, G4, G6 auf die Getriebeabtriebswelle 9.

Im vorliegenden Fall ist das Doppelkupplungsgetriebe 1 automatisiert ausgebildet. Dazu ist den Schalt- und Synchronisiervorrichtungen 10a - 10d jeweils ein Schaltstellantrieb 18a - 18d zugeordnet. Die Schalt- und Synchronisiervorrichtungen 10a - 10d stehen mit den Schaltstellantrieben 18a - 18d kraft- und / oder formschlüssig in Verbindung und sind durch diese zur Schaltung der Gänge bzw. zur Lösung der Schaltungen entsprechend jeweils eingezeichneter Richtungsdoppefpfeile 19a - 19d bewegbar bzw. mit Stellkräften beaufschlagbar. Die Schaltsteilantriebe 18a - 18d sind über zugeordnete Steuerleitungen 20a - 20d mit einem Schaltsteuergerät 21 verbunden und durch dieses ansteuerbar, Zur - Detektierung einer Fahrzeugbewegung ist an der Getriebeabtriebswelle 9 ein Drehsensor 22 angeordnet, der über eine Steuerleitung 23 mit dem Schaltsteuergerät 21 in Verbindung steht.

Während durch ein entsprechendes Steuerprogramm des Schaltsteuergerätes 21 in einer Standardfunktion, d.h. im Normalbetrieb, nur einer der Gänge G1 - G6; R schaltbar ist, sind in einer Parksperrenfunktion, d.h. zur Darstellung einer Parksperre, zwei Gänge der keinen Anfahrgang G1 und R aufweisenden zweiten Getriebeeingangswelle 12 gleichzeitig schaltbar, in diesem Beispiel aufgrund der Ausbildung und Zuordnung der Schalt- und Synchronisiervorrichtungen 10b, 10d bevorzugt der zweite und der vierte Gang G2, G4. Eine insbesondere bei einer Verwendung von aktiv schließbaren Kupplungen 13, 14 erforderliche separate Parksperrenanordnung ist somit eingespart. Durch eine Verwendung von Gängen der zweiten, keinen Anfahrgang G1, R aufweisenden Getriebeeingangswelle 12 wird ein Lösen der Parksperre bei Vorliegen einer größeren Verspannung wesentlich erleichtert bzw. erst ermöglicht, da bei einem geschalteten Gang, der der ersten Getriebeeingangswelle 11 zugeordnet und der Verspannungsrichtung entgegengerichtet ist, durch ein Schließen der ersten Kupplung 13 ein der Verspannung entgegengerichtetes in etwa gleich großes Drehmoment In die Getriebeabtriebswelle 9 einleitbar ist, so daß mindestens eine der Schalt- und Synchronisiervorrichtungen 10b, 10d der als Parksperre geschalteten Gänge G2; G4 entlastet wird und diese mit einer relativ geringen Stellkraft geöffnet werden kann, Dadurch ist dann auch die andere Schalt- und Synchronisiervorrichtung entlastet, so daß auch diese weitgehend kraftlos geöffnet werden kann, wodurch die Parksperre dann vollständig gelöst ist. In einer Sicherheitsfunktion zur Schonung der betreffenden Schalt- und Synchronisiervorrichtungen 10b, 10d und zur Verbesserung des Schaltkomforts ist vor einer Schaltung der Parksperre über eine Auswertung eines von dem Drehsensor 22 lieferbaren Signals feststellbar, ob das betreffende Kraftfahrzeug stillsteht oder rollt. Durch das Steuerprogramm ist die Schaltung der Parksperre im Falle eines Stillstandes bei einer entsprechenden Anforderung durch einen Fahrer auslösbar, während sie im Falle eines Rollens unterdrückbar ist.

### BEZUGSZEICHENLISTE

- 1: Doppelkupplungsgetriebe
- 2a: Antriebsrad des ersten Ganges
- 2b: Abtriebsrad des ersten Ganges
- 3a: Antriebsrad des zweiten Ganges
- 3b: Abtriebsrad des zweiten Ganges
- 4a: Antriebsrad des dritten Ganges
- 4b: Abtriebsrad des dritten Ganges
- 5a: Antriebsrad des vierten Ganges
- 5b: Abtriebsrad des vierten Ganges
- 6a: Antriebsrad des fünften Ganges
- 6b: Abtriebsrad des fünften Ganges
- 7a: Antriebsrad des sechsten Ganges
- 7b: Abtriebsrad des sechsten Ganges
- 8a: Antriebsrad des Rückwärtsganges
- 8b: Abtriebsrad des Rückwärtsganges
- 8c: Zwischenrad des Rückwärtsganges
- 9: Getriebeabtriebswelle
- 10a: erste Schalt- und Synchronisiervorrichtung
- 10b: zweite Schalt- und Synchronisiervorrichtung
- 10c: dritte Schalt- und Synchronisiervorrichtung
- 10d: vierte Schalt- und Synchronisiervorrichtung
- 11: erste Getriebeeingangswelle
- 12: zweite Getriebeeingangswelle
- 13: erste Kupplung
- 14: zweite Kupplung
- 15: Kupplungskorb
- 16: Antriebsmotor
- 17: Kurbelwelle
- 18a: erster Schaltstellantrieb
- 18b: zweiter Schaltstellantrieb
- 18c: dritter Schaltstellantrieb
- 18d: vierter Schaltstellantrieb
- 19a: erster Richtungsdoppelpfeil
- 19b: zweiter Richtungsdoppelpfell
- 19c: dritter Richtungsdoppelpfeil
- 19d: vierter Richtungsdoppelpfeil
- 20a: erste Steuerleitung
- 20b: zweite Steuerleitung
- 20c: dritte Steuerleitung
- 20d: vierte Steuerleitung
- 21: Schaltsteuergerät
- 22: Drehsensor
- 23: Steuerleitung
- G1: erster (Vorwärts-)Gang, Anfahrgang
- G2: zweiter (Vorwärts-)Gang
- G3: dritter (Vorwärts-)Gang
- G4: vierter (Vorwärts-)Gang
- G5: fünfter (Vorwärts-)Gang
- G6: sechster (Vorwärts-)Gang
- R: Rückwärtsgang, Anfahrgang

## Patentansprüche

1. Doppelkupplungsgetriebe, insbesondere für ein Kraftfahrzeug, mit einer einen Anfahrgang (G1; R) aufweisenden und mit einer ersten Kupplung (13) verbundenen ersten Getriebeeingangswelle (11), mit einer einen Fahrgang (G2-G6) aufweisenden und mit einer zweiten Kupplung (14) verbundenen zweiten Getriebeeingangswelle (12) und mit einer gemeinsamen Getriebeabtriebswelle (9), wobei mindestens einer der Getriebeeingangswellen (12) mehrere Gänge (G2, G4, G6) zugeordnet sind, **dadurch gekennzeichnet, daß** in einer Parksperrenfunktion zwei der zweiten Getriebeeingangswelle (12) zugeordnete Gänge (G2, G4; G2, G6; G4, G6) gleichzeitig schaltbar sind und daß die erste Getriebeeingangswelle (11) alle Anfahrgänge (G1, R) aufweist.

2. Doppelkupplungsgetriebe nach Anspruch 1, **dadurch gekennzeichnet, daß** die zwei gleichzeitig schaltbaren Gänge (G2, G4) manuell schaltbar sind, und daß zur Durchführung der Schaltung ein separates Schaltelement vorgesehen ist.

3. Doppelkupplungsgetriebe nach Anspruch 1, **dadurch gekennzeichnet, daß** die zwei gleichzeitig schaltbaren Gänge (G2, G4) automatisiert schaltbar sind, und daß zur Auslösung der Schaltung eine Parkstellung eines Schalthebels oder ein separates Schaltelement vorgesehen ist.

4. Doppelkupplungsgetriebe nach einem der Ansprüche 1 bis 3, **dadurch gekennzeichnet, daß** die zwei gleichzeitig schaltbaren Gänge jeweils nächstbenachbarte Gänge (G2, G4) der betreffenden Getriebeeingangswelle (12) sind.

5. Doppelkupplungsgetriebe nach einem der Ansprüche 1 bis 4, **dadurch gekennzeichnet, daß** die zwei gleichzeitig schaltbaren Gänge fest vorbestimmt sind, und daß es sich um die größten nächstbenachbarten Gänge (G4, G6) der betreffenden Getriebeeingangswelle (12) handelt.

6. Doppelkupplungsgetriebe nach Anspruch 3, **dadurch gekennzeichnet, daß** die zwei gleichzeitig schaltbaren Gänge weitgehend variabel wählbar sind.

7. Doppelkupplungsgetriebe nach einem der Ansprüche 3 bis 6, **dadurch gekennzeichnet, daß** Sensoren zur Bestimmung einer Verspannungsstärke und/oder zur Ermittlung einer Verspannungsrichtung der gleichzeitig schaltbaren Gänge (G2, G4) vorgesehen sind.

8. Doppelkupplungsgetriebe nach einem der Ansprüche 1 bis 7, **dadurch gekennzeichnet, daß** eine Sicherheitssperre zur Vermeidung einer Schaltung der zwei gleichzeitig schaltbaren Gänge (G2, G4) bei rollendem Kraftfahrzeug vorgesehen ist, und daß die Sicherheitssperre bei Fahrzeugstillstand lösbar ausgebildet ist.

9. Verfahren zur Steuerung eines automatisierten Doppelkupplungsgetriebes gemäß den Ansprüchen 3 bis 6, **dadurch gekennzeichnet, daß** in einer Parksperrenfunktion eine Aktivierung einer Parksperre durch ein gleichzeitlges Einlegen von zwei einer keinen Anfahrgang (G1, R) aufweisenden Getriebeeingangswelle (12) zugeordneten Gängen (G2, G4) erfolgt.

10. Verfahren nach Anspruch 9, **dadurch gekennzeichnet, daß** bei einer Aktivierung der Parksperre zunächst bestimmt wird, ob eine Fahrzeugbewegung oder ein Fahrzeugstillstand vorliegt, und daß bei Vorliegen einer Fahrzeugbewegung die Aktivierung der Parksperre verhindert wird, wogegen sie bei Vorliegen eines Fahrzeugstillstandes zugelassen wird.

11. Verfahren nach Anspruch 9 oder 10, **dadurch gekennzeichnet, daß** zur Deaktivierung der Parksperre zunächst eine Verspannungsstärke der gleichzeitig geschalteten Gänge (G2, G4) bestimmt wird, daß bei Vorliegen einer kleineren Verspannung die Schaltung der Gänge (G2, G4) weitgehend kraftlos gelöst wird.

12. Verfahren nach Anspruch 11, **dadurch gekennzeichnet, daß** bei Vorliegen einer größeren Verspannung die Verspannungsrichtung ermittelt wird, daß dann ein der Verspannungsrichtung entgegengerichteter Anfahrgang eingelegt und eine zugeordnete Kupplung soweit geschlossen wird, bis die Verspannung hinrelchend klein ist, worauf die Schaltung der Gänge (G2, G4) weitgehend kraftlos gelöst wird.

## Claims

1. Double-clutch transmission, in particular for a motor vehicle, with a first transmission input shaft (11) having a starting gear (G1; R) and connected to a first clutch (13), with a second transmission input shaft (12) having a driving gear (G2-G6) and connected to a second clutch (14), and with a common transmission output shaft (9), at least one of the transmission input shafts (12) being assigned a plurality of gears (G2, G4, G6), **characterized in that**, in a parking-position lock function, two gears (G2, G4; G2, G6; G4, G6) assigned to the second transmission input shaft (12) can be shifted simultaneously, and **in that** the first transmission input shaft (11) has all the starting gears (G1, R).

2. Double-clutch transmission according to Claim 1, **characterized in that** the two simultaneously shiftable gears (G2, G4) can be shifted manually, and **in that** a separate shifting element is provided for carrying out the shift.

3. Double-clutch transmission according to Claim 1, **characterized in that** the two simultaneously shiftable gears (G2, G4) can be shifted in an automated manner, and **in that** a parking position of a shift lever or a separate shifting element is provided for triggering the shift.

4. Double-clutch transmission according to one of Claims 1 to 3, **characterized in that** the two simultaneously shiftable gears are in each case the most closely adjacent gears (G2, G4) of the respective transmission input shaft (12).

5. Double-clutch transmission according to one of Claims 1 to 4, **characterized in that** the two simultaneously shiftable gears are permanently predetermined, and **in that** they are the highest, most closely adjacent gears (G4, G6) of the respective transmission input shaft (12).

6. Double-clutch transmission according to Claim 3, **characterized in that** the two simultaneously shiftable gears can be selected in a largely variable manner.

7. Double-clutch transmission according to one of Claims 3 to 6, **characterized in that** sensors are provided for determining the restraint intensity and/or for determining the restraint direction of the simultaneously shiftable gears (G2, G4).

8. Double-clutch transmission according to one of Claims 1 to 7, **characterized in that** a safety lock is provided for preventing a shift of the two simultaneously shiftable gears (G2, G4) when the motor vehicle is rolling, and **in that** the safety lock is designed to be releasable when the vehicle is at a standstill.

9. Method for controlling an automated double-clutch transmission according to Claims 3 to 6, **characterized in that**, in a parking-position lock function, an activation of a parking-position lock takes place by means of a simultaneous selection of two gears (G2, G4) assigned to a transmission input shaft (12) having no starting gear (G1, R).

10. Method according to Claim 9, **characterized in that**, in the event of an activation of the parking-position lock, it is first determined whether there is a vehicle movement or a vehicle standstill, and **in that**, in the presence of a vehicle movement, the activation of the parking-position lock is prevented, whereas, in the presence of a vehicle standstill, the said activation is permitted.

11. Method according to Claim 9 or 10, **characterized in that**, for deactivating the parking-position lock, first a restraint intensity of the simultaneously shifted gear (G2, G4) is determined, and **in that**, in the presence of a lower restraint, the shift of the gears (G2, G4) is triggered in a largely force-free manner.

12. Method according to Claim 11, **characterized in that**, in the presence of a higher restraint, the restraint direction is determined, and **in that**, then, a starting gear directed opposite to the restraint direction is selected, and an assigned clutch is closed until the restraint is sufficiently low, whereupon the shift of the gears (G2, G4) is triggered in a largely force-free manner.

## Revendications

1. Boîte de vitesses à embrayage double, en particulier pour véhicule automobile, comprenant un premier arbre de transmission primaire (11) présentant un rapport de démarrage (G1 ; R) et relié à un premier embrayage (13), un second arbre de transmission primaire (12) présentant un rapport de marche (G2-G6) et relié à un second embrayage (14), et un arbre de transmission secondaire commun (9), dans laquelle plusieurs rapports (G2, G4, G6) sont associés à au moins un arbre de transmission primaire (12), **caractérisée en ce que** dans une fonction de frein de stationnement, deux des rapports (G2, G4 ; G2, G6 ; G4, G6) associés au second arbre de transmission primaire (12) sont embrayables simultanément, et **en ce que** le premier arbre de transmission primaire (11) présente tous les rapports de démarrage (G1, R).

2. Boîte de vitesses à embrayage double selon la revendication 1, **caractérisée en ce que** les deux rapports (G2, G4) embrayables simultanément sont embrayables manuellement, et **en ce que** pour réaliser l'embrayage, un élément d'embrayage séparé est prévu.

3. Boîte de vitesses à embrayage double selon la revendication 1, **caractérisée en ce que** les deux rapports (G2, G4) embrayables simultanément sont embrayables automatiquement, et **en ce que** pour désaccoupler l'embrayage, une position de stationnement d'un levier d'embrayage ou un élément d'embrayage séparé est prévu.

4. Boîte de vitesses à embrayage double selon l'une des revendications 1 à 3, **caractérisée en ce que** les deux rapports embrayables simultanément sont des rapports immédiatement voisins (G2, G4) de l'arbre de transmission primaire concerné (12).

5. Boîte de vitesses à embrayage double selon l'une des revendications 1 à 4, **caractérisée en ce que** les deux rapports embrayables simultanément sont prédéterminés de manière fixe et **en ce qu'**il s'agit des plus grands rapports (G4, G6) immédiatement voisins de l'arbre de transmission primaire concerné (12).

6. Boîte de vitesses à embrayage double selon la revendication 3, **caractérisée en ce que** les deux rapports embrayables simultanément sont sélectionnables, en disposant d'une large possibilité de variation.

7. Boîte de vitesses à embrayage double selon l'une des revendications 3 à 6, **caractérisée en ce qu'**on prévoit des capteurs pour détecter une intensité de déformation et/ou pour détecter une direction de déformation des rapports (G2, G4) embrayables simultanément.

8. Boîte de vitesses à embrayage double selon l'une des revendications 1 à 7, **caractérisée en ce qu'**on prévoit un cliquet de sûreté pour éviter un embrayage des deux rapports (G2, G4) embrayables simultanément lorsque le véhicule roule, et **en ce que** le cliquet de sûreté est amovible à l'immobilisation du véhicule.

9. Procédé de régulation d'une boîte de vitesses à embrayage double automatisée selon . les revendications 3 à 6, **caractérisé en ce que** dans une fonction de frein de stationnement, une activation d'un frein de stationnement se produit par un engagement simultané de deux rapports (G2, G4) associés à un arbre de transmission primaire (12) ne présentant pas de rapport de démarrage (G1, R).

10. Procédé selon la revendication 9, **caractérisé en ce qu'**en cas d'activation du frein de stationnement, on commence par déterminer s'il y a déplacement du véhicule ou immobilisation du véhicule, et **en ce qu'**en cas de déplacement du véhicule, l'activation du frein de stationnement est empêchée, tandis qu'elle est autorisée lorsqu'il y a immobilisation du véhicule.

11. Procédé selon la revendication 9 ou 10, **caractérisé en ce que** pour désactiver le frein de stationnement, on commence par déterminer une intensité de déformation des rapports (G2, G4) embrayés simultanément, et **en ce que** dans le cas d'une déformation moins importante, l'embrayage des rapports (G2, G4) est désaccouplé, largement sans efforts.

12. Procédé selon la revendication 11, **caractérisé en ce que** dans le cas d'une déformation plus importante, la direction de la déformation est déterminée, **en ce qu'**ensuite, un rapport de démarrage opposé à la direction de la déformation est engagé et un embrayage associé est fermé jusqu'à ce que la déformation soit suffisamment faible, après quoi l'embrayage des rapports (G2, G4) est désaccouplé, largement sans efforts.
